# EUROPEAN PATENT APPLICATION

(11) **EP 4 761 075 A1**
(43) Date of publication of application: **17.06.2026**
(21) Application number: 25222405.0
(22) Date of filing: 10.12.2025
(51) Int. Cl.: H02K 5/22, H02K 11/25

(54) **MOTOR UNIT**

(30) Priority: 16.12.2024 JP 2024220173
(71) Applicant: Toyota Jidosha Kabushiki Kaisha, Toyota-shi, Aichi-ken 471-8571 (JP)
(72) Inventor: URANO, Hiroaki, TOYOTA-SHI, AICHI-KEN, 471-8571 (JP); DEGUCHI, Junichi, TOYOTA-SHI, AICHI-KEN, 471-8571 (JP); KAWAKAMI, Jun, TOYOTA-SHI, AICHI-KEN, 471-8571 (JP); NAGASAWA, Naohiro, TOYOTA-SHI, AICHI-KEN, 471-8571 (JP); WATANABE, Kohei, TOYOTA-SHI, AICHI-KEN, 471-8571 (JP); TANAKA, Yuki, TOYOTA-SHI, AICHI-KEN, 471-8571 (JP); USHIDA, Norihiro, TOYOTA-SHI, AICHI-KEN, 471-8571 (JP)
(74) Representative: Cabinet Beau de Loménie

(57) **Abstract**

A motor unit (1) includes a motor (20), motor busbars (32, 34, 36), first terminals (32a, 34a, 36a), a temperature measuring unit (38), a terminal block (40) provided with second terminals (42a, 44a, 46a), and a temperature sensor unit (49). The motor (20) is stored in the case (10) which is fixed to the terminal block (40). The motor busbars (32, 34, 36) and the temperature measuring unit (38) are connected to a coil (30) of the motor (20). The first terminals (32a, 34a, 36a) are positioned on distal ends of the motor busbars (32, 34, 36). The second terminals (42a, 44a, 46a) are configured to be attached to and detached from the first terminals (32a, 34a, 36a). The temperature sensor unit (49) is fixed to the terminal block (40) and is configured to be attached to and detached from the temperature measuring unit (38).

## Description

### BACKGROUND OF THE INVENTION

### 1. Field of the Invention

The technology disclosed in the present specification relates to a motor unit.

### 2. Description of Related Art

In Japanese Unexamined Patent Application Publication No. 2017-143684 (JP 2017-143684 A), a motor unit is described. In the motor unit, in a cover that covers a stator coil, a temperature sensor unit is disposed in a position that faces a coil end. At the same time as the assembly of the cover, the temperature sensor unit is held between a cover inner surface and the coil end. As a result, the assembly of the temperature sensor unit is completed.

### SUMMARY OF THE INVENTION

As in JP 2017-143684 A, in an aspect in which a temperature sensor is assembled at the same time as the assembly of the cover, the visibility of an operator is blocked by the cover. Therefore, it is difficult to visually check the assembly state to see whether there is misalignment or damage of the temperature sensor, for example.

A technology disclosed in the present specification is embodied as a motor unit. In a first aspect of the present technology, the motor unit includes a case. The motor unit includes a motor. The motor is stored in the case and has a coil. The motor unit includes a motor busbar connected to the coil. The motor unit includes a first terminal positioned on a distal end of the motor busbar. The motor unit includes a temperature measuring unit connected to the coil. The motor unit includes a terminal block fixed to the case. The motor unit includes a second terminal. The second terminal is provided on the terminal block and is configured to be attached to and detached from the first terminal. The motor unit includes a temperature sensor unit. The temperature sensor unit is fixed to the terminal block and is configured to be attached to and detached from the temperature measuring unit.

In the configuration described above, the temperature sensor unit is fixed to the terminal block. As a result, when the terminal block is to be assembled with respect to the case, the temperature sensor unit and the temperature measuring unit can be attached to each other at the same time. The terminal block is sufficiently small as compared to the cover, and the visibility of the operator is not blocked. Therefore, the assembly state between the temperature sensor unit and the temperature measuring unit can be visually checked. It becomes possible to restrain the occurrence of a faulty assembly of the temperature sensor unit.

In a second aspect of the present technology, the first terminal and the temperature measuring unit may protrude along a first direction in addition to the first aspect described above. The second terminal may extend along the first direction and may include a contact surface in contact with the first terminal. The temperature sensor unit may further include an insertion hole that extends along the first direction and that is configured such that the temperature measuring unit can be inserted to and removed from the insertion hole.

With such a configuration, the temperature measuring unit can be inserted into the insertion hole when the terminal block is assembled with respect to the case. As a result, it becomes possible to attach the temperature sensor unit and the temperature measuring unit to each other at the same time as the assembly of the terminal block.

In a third aspect of the present technology, a fastening member configured to fix the first terminal and the second terminal to each other may be further included in addition to the first or second aspect described above.

In a fourth aspect of the present technology, the temperature sensor unit may be fixed to the terminal block in an aspect in which the temperature sensor unit is movable along the first direction in addition to any one of the first to third aspects. A first elastic member that biases the temperature sensor unit toward the temperature measuring unit along the first direction may further included.

With such a configuration, it becomes possible to restrain a situation in which a contact failure between the temperature measuring unit and the temperature sensor unit occurs.

In a fifth aspect of the present technology, the terminal block may include a hole portion that extends along the first direction and that faces the temperature measuring unit in addition to the fourth aspect described above. The temperature sensor unit may be disposed inside the hole portion. A first seal that surrounds the perimeter of an outer peripheral surface of the temperature sensor unit and that is disposed between the outer peripheral surface and an inner peripheral surface of the hole portion may be further included.

With such a configuration, it becomes possible to enhance the airtightness of the case.

In a sixth aspect of the present technology, the second elastic member disposed inside the insertion hole of the temperature sensor unit may be further included in addition to the second or the third aspect described above. The second elastic member may be configured to bias the temperature measuring unit inserted in the insertion hole in a second direction substantially orthogonal to the first direction.

With such a configuration, the temperature measuring unit can be prevented from easily coming out of the insertion hole.

In a seventh aspect of the present technology, the terminal block may include a hole portion that extends along the first direction and that faces the temperature measuring unit in addition to the sixth aspect described above. The temperature sensor unit may be disposed inside the hole portion. A first seal that surrounds the perimeter of an outer peripheral surface of the temperature sensor unit and that is disposed between the outer peripheral surface and an inner peripheral surface of the hole portion may be further included.

With such a configuration, it becomes possible to enhance the airtightness of the case.

In an eighth aspect of the present technology, the terminal block may include a hole portion that extends along the first direction and that faces the temperature measuring unit in addition to the sixth aspect described above. The temperature sensor unit may be disposed inside the hole portion. A wire hole through which a wire drawn out from the temperature sensor unit passes may be provided in a bottom surface of the hole portion. A second seal that surrounds the perimeter of the wire hole and that is disposed between the bottom surface of the hole portion and the temperature sensor unit may be further included.

With such a configuration, it becomes possible to enhance the airtightness of the case.

In a ninth aspect of the present technology, the terminal block may include a hole portion that extends along the first direction and that faces the temperature measuring unit in addition to the second or third aspect described above. The temperature sensor unit may be disposed inside the hole portion. A first seal that surrounds the perimeter of an outer peripheral surface of the temperature sensor unit and that is disposed between the outer peripheral surface and an inner peripheral surface of the hole portion may be further included.

With such a configuration, it becomes possible to enhance the airtightness of the case.

In a tenth aspect of the present technology, the terminal block may include a hole portion that extends along the first direction and that faces the temperature measuring unit in addition to the second or third aspect described above. The temperature sensor unit may be disposed inside the hole portion. A wire hole through which a wire drawn out from the temperature sensor unit passes may be provided in a bottom surface of the hole portion. A second seal that surrounds the perimeter of the wire hole and that is disposed between the bottom surface of the hole portion and the temperature sensor unit may be further included.

With such a configuration, it becomes possible to enhance the airtightness of the case.

In an eleventh aspect of the present technology, the temperature measuring unit may be connected to a neutral point of the coil in addition to any one of the first to tenth aspects.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic sectional view of a motor unit 1;
FIG. 2 is a front view seen from the direction of an arrow Y2 in FIG. 1;
FIG. 3 is a side view seen from the direction of an arrow Y3 in FIG. 2;
FIG. 4 is a front view showing a state before assembly of a terminal block 40;
FIG. 5 is a sectional view taken along line V-V in FIG. 2; and
FIG. 6 is a sectional view of a temperature sensor unit 49 of Embodiment 2.

### DETAILED DESCRIPTION OF EMBODIMENTS

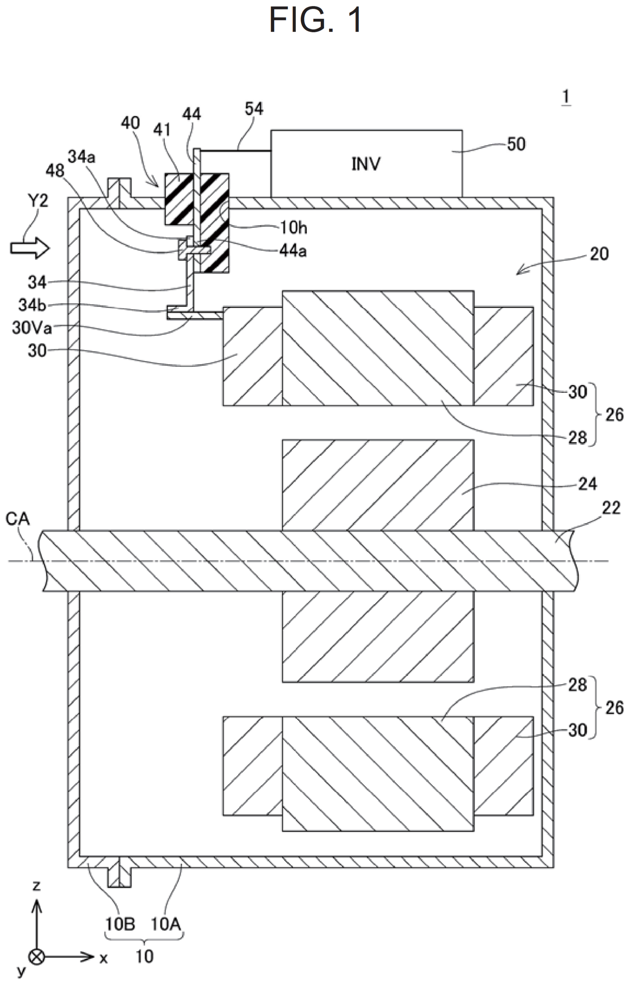

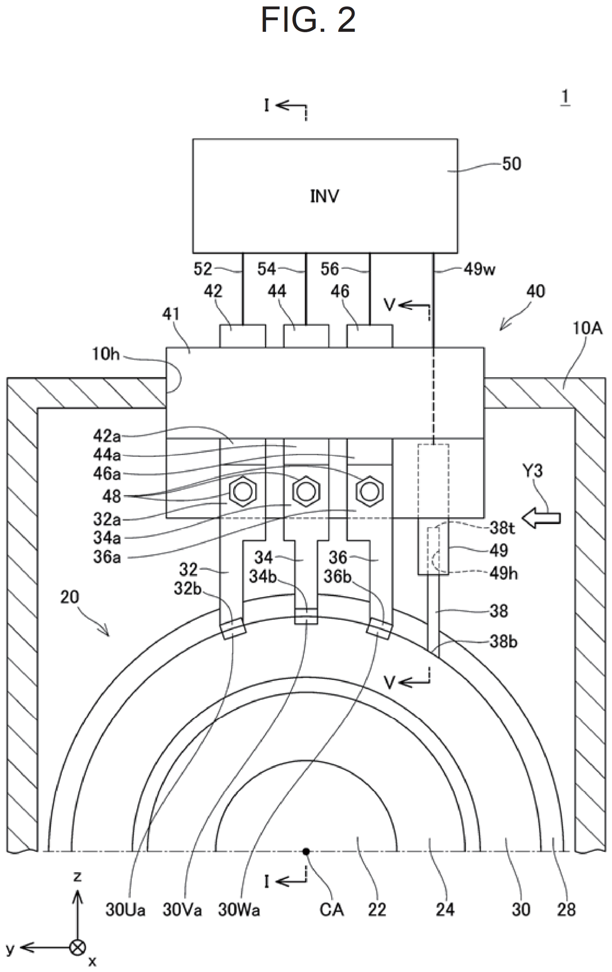

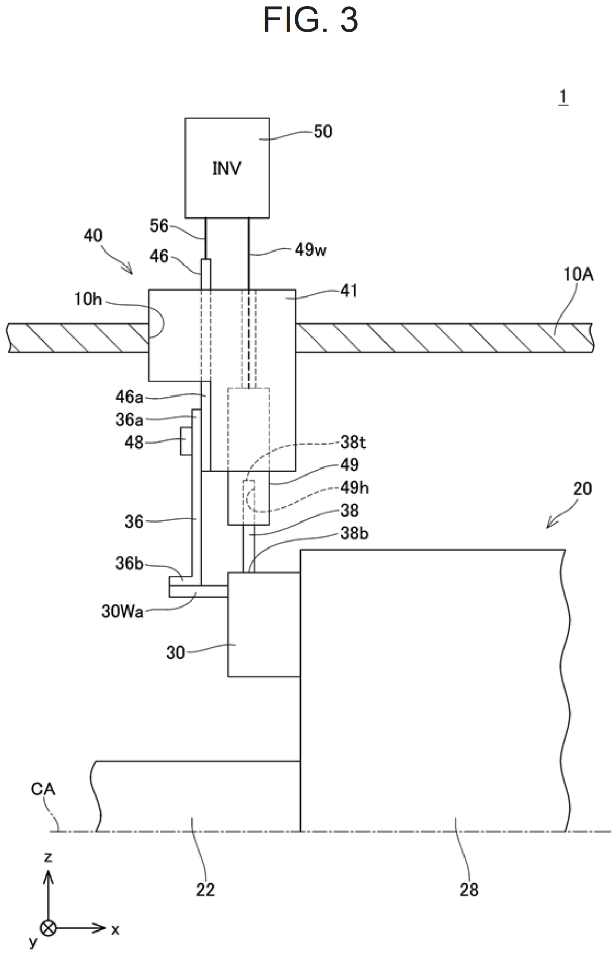

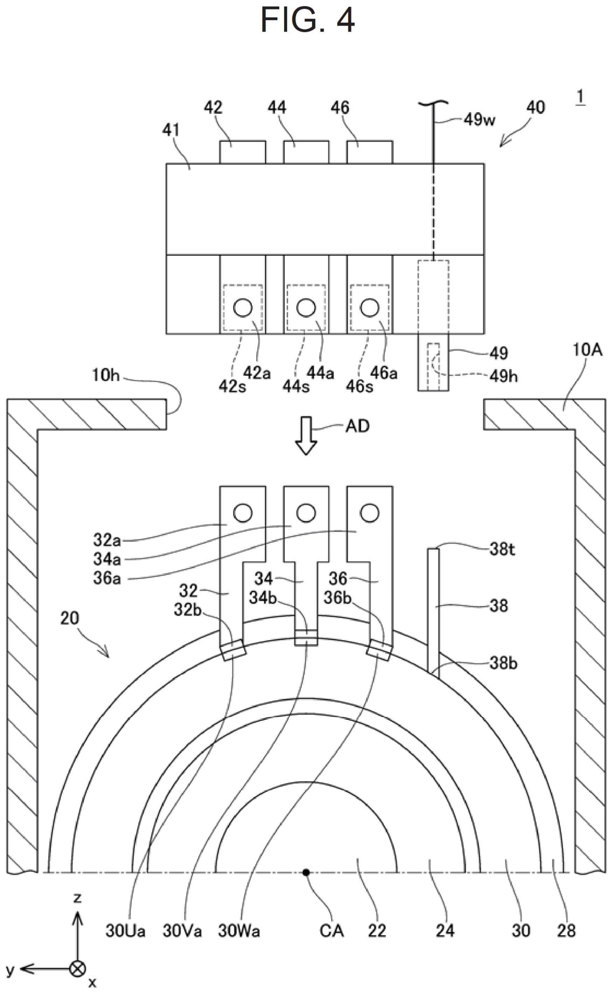

In FIG. 1, a schematic sectional view of a motor unit 1 according to the present embodiment is shown. In FIG. 1, an x-direction is a direction in which a central axis CA of a shaft 22 extends. A y-direction and a z-direction are directions in a plane perpendicular to the central axis CA. The coordinate relationship is similar in subsequent drawings. FIG. 1 is a sectional view taken along line I-I in FIG. 2. In other words, FIG. 1 is a sectional view cut through the central axis CA, a first terminal 34a, and a second terminal 44a. In FIG. 2, a front view seen from the direction of an arrow Y2 in FIG. 1 is shown. In FIG. 3, a side view seen from the direction of an arrow Y3 in FIG. 2 is shown. In FIG. 4, a front view showing a state before assembly of a terminal block 40 is shown. FIG. 4 is a view seen from a position similar to that of FIG. 2. In FIG. 2 to FIG. 4, a case main body 10A is seen in a sectional view for the ease of viewing.

The motor unit 1 mainly includes a case 10, a motor 20, the terminal block 40, and an inverter 50. The case 10 includes the case main body 10A and a cover 10B. In the case main body 10A, the motor 20 is stored. The cover 10B closes an opening portion in the case main body 10A on the -x-direction side.

The motor 20 is a three-phase motor. The motor 20 has the shaft 22, a rotor 24, and a stator 26. The shaft 22 extends along the central axis CA of the motor 20. The rotor 24 is a member that has a roughly cylindrical shape. The rotor 24 is fixed to the shaft 22. The rotor 24 rotates with the shaft 22 about the rotation center of the central axis CA. The stator 26 is a member that has a roughly cylindrical shape. The stator 26 has a stator core 28 and a coil 30. The coil 30 includes a U-phase coil 30U, a V-phase coil 30V, and a W-phase coil 30W. One end 30Ua of the U-phase coil 30U, one end 30Va of the V-phase coil 30V, and one end 30Wa of the W-phase coil 30W protrude from the coil 30 in a -x-direction.

Each of the motor busbars 32, 34, 36 is a plate-shaped member and is formed with use of a conductive member such as metal. A proximal end 32b of the motor busbar 32 is welded to the one end 30Ua. A proximal end 34b of the motor busbar 34 is welded to the one end 30Va. A proximal end 36b of the motor busbar 36 is welded to one end 30Wa. Each of the motor busbars 32, 34, 36 have tabular first terminals 32a, 34a, 36a positioned on distal ends thereof. The first terminals 32a, 34a, 36a protrude in a +z-direction.

The temperature measuring unit 38 is a rod-shaped or plate-shaped member. The temperature measuring unit 38 is a member used for measuring the temperature of the coil 30. The temperature measuring unit 38 is formed with use of a conductive member such as metal. A proximal end 38b of the temperature measuring unit 38 is connected to a neutral point (not shown) of the coil 30. A distal end 38t of the temperature measuring unit 38 protrudes in the +z-direction.

The terminal block 40 is fixed to the case 10. Specifically, the terminal block 40 is fitted in a through-hole 10h formed in the case main body 10A. The terminal block 40 mainly includes a base 41, second terminals 42a, 44a, 46a, terminal block busbars 42, 44, 46, and the temperature sensor unit 49. The base 41 is configured by an insulating body such as a resin material. In the base 41, the second terminals 42a, 44a, 46a are disposed. The second terminals 42a, 44a, 46a extend along the z-direction and are lined up along a y-direction. The second terminals 42a, 44a, 46a are plate-shaped members and are formed with use of conductive members such as metal. The second terminals 42a, 44a, 46a include contact surfaces 42s, 44s, 46s, respectively. The contact surfaces 42s, 44s, 46s are surfaces that come into contact with the first terminals 32a, 34a, 36a, respectively. The first terminals 32a, 34a, 36a are fixed to the second terminals 42a, 44a, 46a by bolts 48, respectively.

The terminal block busbars 42, 44, 46 are connected to the second terminals 42a, 44a, 46a, respectively. In the present embodiment, the terminal block busbars 42, 44, 46 are integrally formed with the second terminals 42a, 44a, 46a, respectively. In a modification, the terminal block busbars 42, 44, 46 may be configured as bodies separate from the second terminals 42a, 44a, 46a and may be connected to the second terminals 42a, 44a, 46a, respectively, by fastening members. Each of end portions of the terminal block busbars 42, 44, 46 is connected to a corresponding one of inverter busbars 52, 54, 56. In FIG. 1 to FIG. 3, each of the inverter busbars 52, 54, 56 is simply illustrated by a straight line. The inverter busbars 52, 54, 56 are connected to the inverter 50. A wire 49w drawn out from the temperature sensor unit 49 is also connected to the inverter 50.

### Structure of Temperature Sensor Unit 49

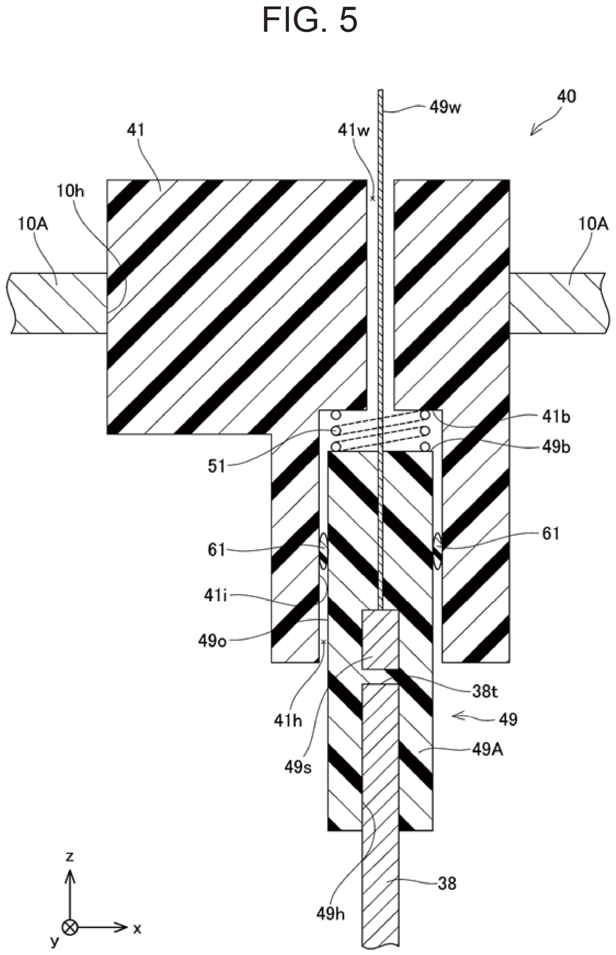

The temperature sensor unit 49 is fixed to the terminal block 40. The specific content of the temperature sensor unit 49 is described. FIG. 5 is a sectional view taken along line V-V in FIG. 2. FIG. 5 is a sectional view cut through the temperature sensor unit 49 and the temperature measuring unit 38.

The temperature sensor unit 49 mainly includes a base body portion 49A, a sensor element 49s, and the wire 49w. The base body portion 49A extends along the z-direction. The base body portion 49A is configured by an insulating body such as a resin material. An insertion hole 49h is opened in an end portion of the base body portion 49A in a -z-direction thereof. The insertion hole 49h extends along the z-direction and is configured such that the temperature measuring unit 38 can be inserted thereto and removed therefrom. In FIG. 5, a state in which the distal end 38t of the temperature measuring unit 38 is inserted inside the insertion hole 49h is shown.

By fixing the terminal block 40 to the through-hole 10h, the position of the insertion hole 49h in an x-y plane is specified. By fixing the stator 26 inside the case main body 10A, the position of the distal end 38t in the x-y plane is specified. The temperature sensor unit 49 is disposed such that the x-y plane position of the insertion hole 49h that is specified and the x-y plane position of the distal end 38t that is specified coincide with each other. As a result, as described later, when the terminal block 40 is to be assembled with respect to the case main body 10A, it becomes possible to attach the temperature sensor unit 49 and the temperature measuring unit 38 to each other at the same time.

The sensor element 49s is disposed in the vicinity of a bottom surface of the insertion hole 49h. Various types of elements can be used for the sensor element 49s. In the present embodiment, the sensor element 49s is a thermistor. The wire 49w is connected to the sensor element 49s. The wire 49w is drawn out from a bottom surface 49b of the base body portion 49A.

A hole portion 41h is opened in an -z-direction end portion of the base 41 of the terminal block 40. The hole portion 41h extends along the z-direction and faces the temperature measuring unit 38. The temperature sensor unit 49 is disposed inside the hole portion 41h. Specifically, the temperature sensor unit 49 is fitted in the hole portion 41h in an aspect in which sliding in the z-direction is possible. As a result, the temperature sensor unit 49 is fixed to the terminal block 40 in an aspect in which movement in the z-direction is possible. A wire hole 41w passing through a bottom surface 41b of the hole portion 41h in the z-direction is formed therein. The wire 49w is routed inside the wire hole 41w. As a result, the wire 49w can be drawn out to the outside through the wire hole 41w.

A first elastic member 51 is disposed between the bottom surface 41b of the hole portion 41h and the bottom surface 49b of the temperature sensor unit 49. Various types of members can be used for the first elastic member 51. In the present embodiment, the first elastic member 51 is a helical spring. The first elastic member 51 biases the temperature sensor unit 49 toward the temperature measuring unit 38 along the z-direction. As a result, a state in which the distal end 38t of the temperature measuring unit 38 is inserted deep into the insertion hole 49h can be maintained. It becomes possible to restrain a situation in which a contact failure between the temperature measuring unit 38 and the temperature sensor unit 49 occurs.

A first seal 61 is disposed between an outer peripheral surface 49o of the temperature sensor unit 49 and an inner peripheral surface 41i of the hole portion 41h. The first seal 61 surrounds the perimeter of the outer peripheral surface 49o. By the first seal 61, sealing can be provided between the inside and the outside of the case 10, and hence it becomes possible to enhance the airtightness of the case 10. The first seal 61 may vary in materials and types. In the present embodiment, the first seal 61 is an O-ring made of resin.

### Assembly Process and Effects

An assembly process of the terminal block 40 is described. The case main body 10A in a state of not being closed by the cover 10B is prepared. The stator 26 is assembled inside the case main body 10A. As a result, an x-y plane position of the distal end 38t of the temperature measuring unit 38 is specified.

Next, as shown in FIG. 4, the terminal block 40 is assembled with respect to the case main body 10A. Specifically, the terminal block 40 is inserted into the through-hole 10h in the case main body 10A (see arrow AD). As a result, the insertion hole 49h can be moved to approach the distal end 38t while the x-y plane position of the insertion hole 49h is specified. As described above, the temperature sensor unit 49 is fixed to the terminal block 40 such that the x-y plane position of the insertion hole 49h and the x-y plane position of the distal end 38t coincide with each other. Therefore, the distal end 38t can be inserted into the insertion hole 49h by inserting the terminal block 40 into the through-hole 10h (see FIG. 2). In other words, when the terminal block 40 is to be assembled with respect to the case main body 10A, the temperature sensor unit 49 and the temperature measuring unit 38 can be attached to each other at the same time.

Next, the second terminals 42a, 44a, 46a and the first terminals 32a, 34a, 36a are fixed to each other with use of the bolts 48. The terminal block busbars 42, 44, 46 are connected to the inverter busbars 52, 54, 56, respectively. The cover 10B is assembled to the case main body 10A by a fastening member (not shown). As a result, the assembly process of the terminal block 40 is completed.

Effects are described. The terminal block 40 is sufficiently small as compared to the cover 10B, and the visibility of the operator is not blocked. Therefore, the temperature sensor unit 49 and the temperature measuring unit 38 can be assembled while being visually checked from the arrow Y2 side in FIG. 1. In other words, it becomes possible to visually check whether the distal end 38t is inserted into the insertion hole 49h. As a result, it becomes possible to restrain the occurrence of a faulty assembly of the temperature sensor unit 49.

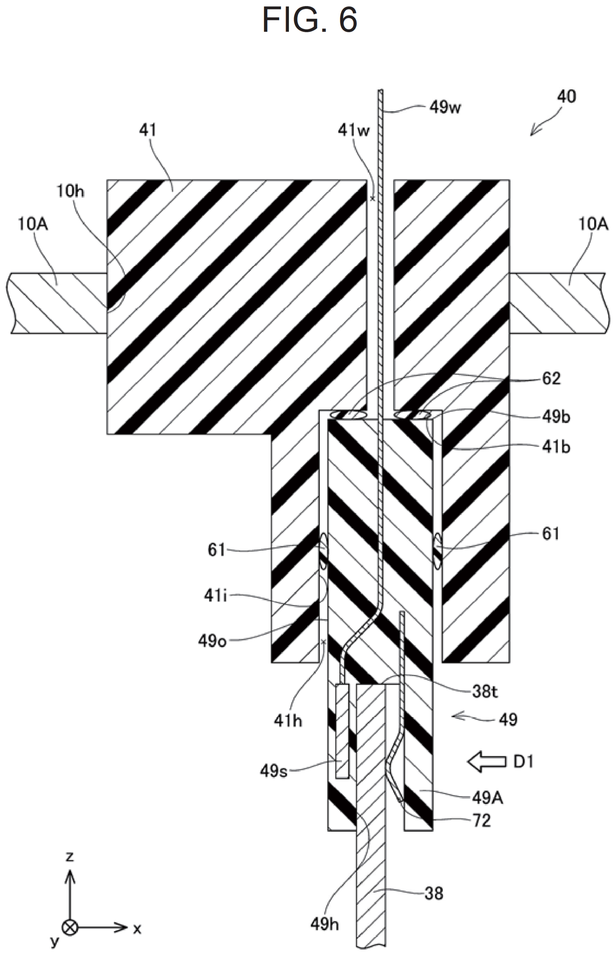

Embodiment 2 is different from Embodiment 1 in terms of the content of the elastic member included in the temperature sensor unit 49. Description is omitted by denoting sections that are in common between Embodiment 1 and Embodiment 2 by the same reference characters. In FIG. 6, a sectional view of the temperature sensor unit 49 of Embodiment 2 is shown. FIG. 6 of Embodiment 2 is a sectional view taken along a position similar to that of FIG. 5 of Embodiment 1.

The temperature sensor unit 49 in Embodiment 2 further includes a second elastic member 72. The second elastic member 72 is disposed inside the insertion hole 49h. The second elastic member 72 is disposed on the +x-direction side with respect to the insertion hole 49h. The sensor element 49s is disposed on the -x-direction side with respect to the insertion hole 49h. In other words, the second elastic member 72 and the sensor element 49s are disposed to face each other in the x-direction. The second elastic member 72 biases the temperature measuring unit 38 inserted in the insertion hole 49h in the direction D1. In other words, the second elastic member 72 biases the temperature measuring unit 38 in a direction (-x-direction) substantially orthogonal to the inserting direction (z-direction). As a result, the temperature measuring unit 38 is in close contact with an inner wall of the insertion hole 49h on the -x-direction side thereof. The inner wall on the -x-direction side is a part on which the sensor element 49s is disposed. Therefore, the temperature measuring unit 38 can maintain a state of being positioned in the vicinity of the sensor element 49s. It becomes possible to restrain a situation in which a contact failure between the temperature measuring unit 38 and the temperature sensor unit 49 occurs. By the biasing force of the second elastic member 72, the temperature measuring unit 38 can be prevented from easily coming out of the insertion hole 49h.

Various types of members can be used for the second elastic member 72. In the present embodiment, the second elastic member 72 is a leaf spring.

A second seal 62 is disposed between the bottom surface 41b of the hole portion 41h and the bottom surface 49b of the temperature sensor unit 49. The second seal 62 surrounds the perimeter of the wire hole 41w. By the second seal 62, the wire hole 41w can be sealed, and hence it becomes possible to enhance the airtightness of the case 10. The second seal 62 may vary in materials and types. In the present embodiment, the second seal 62 is an O-ring made of resin.

In Embodiment 2, a form in which both the first seal 61 and the second seal 62 are included has been described, but limitation is not made to this form. A form in which at least one of the first seal 61 and the second seal 62 is included may be employed. As a result, it becomes possible to maintain the airtightness of the case 10.

Although specific examples of the technology disclosed by the present description have been described, such examples are provided only for illustrative purposes and are not intended to limit the scope of claims. A technology as disclosed in the claims includes various modifications and alterations of the specific embodiments illustrated above. Technical elements described in the present specification or the drawings exert technical utility independently or by various combinations, and are not limited to the combinations described in the claims at the time of the filing. Further, the technology exemplified in the present specification or the drawings can concurrently achieve a plurality of objects, and has technical utility simply by achieving one object of the plurality of objects.

### Modifications

The section to which the proximal end 38b of the temperature measuring unit 38 is connected is not limited to the neutral point and may be various sections. The aspect in which the proximal end 38b is connected to the coil may vary. For example, the proximal end 38b may be connected by welding or fastening to an arc-shaped busbar that connects end portions of coil wires to each other. For example, the temperature measuring unit 38 may be integrally formed with the coil wires.

## Claims

1. A motor unit (1) comprising:
a case (10);
a motor (20) stored in the case (10), the motor (20) having a coil (30);
a motor busbar (32, 34, 36) connected to the coil (30);
a first terminal (32a, 34a, 36a) positioned on a distal end of the motor busbar (32, 34, 36);
a temperature measuring unit (38) connected to the coil (30);
a terminal block (40) fixed to the case (10);
a second terminal (42a, 44a, 46a) provided on the terminal block (40), the second terminal (42a, 44a, 46a) being configured to be attached to and detached from the first terminal (32a, 34a, 36a); and
a temperature sensor unit (49) fixed to the terminal block (40), the temperature sensor unit (49) being configured to be attached to and detached from the temperature measuring unit (38).

2. The motor unit (1) according to claim 1, wherein:
the first terminal (32a, 34a, 36a) and the temperature measuring unit (38) protrude along a first direction;
the second terminal (42a, 44a, 46a) extends along the first direction, the second terminal (42a, 44a, 46a) including a contact surface (42s, 44s, 46s) being in contact with the first terminal (32a, 34a, 36a); and
the temperature sensor unit (49) further includes an insertion hole (49h) that extends along the first direction, the insertion hole (49h) being configured such that the temperature measuring unit (38) is inserted into and removed from the insertion hole (49h).

3. The motor unit (1) according to claim 2, further comprising a fastening member that is configured to fix the first terminal (32a, 34a, 36a) and the second terminal (42a, 44a, 46a) to each other.

4. The motor unit (1) according to claim 2 or 3, wherein:
the temperature sensor unit (49) is fixed to the terminal block (40) in an aspect in which the temperature sensor unit (49) is configured to move along the first direction; and
the motor unit (1) further comprises a first elastic member (51) configured to bias the temperature sensor unit (49) toward the temperature measuring unit (38) along the first direction.

5. The motor unit (1) according to claim 4, wherein:
the terminal block (40) includes a hole portion (41h) that extends along the first direction, the hole portion (41h) facing the temperature measuring unit (38);
the temperature sensor unit (49) is disposed inside the hole portion (41h); and
the motor unit (1) further comprises a first seal (61) that surrounds a perimeter of an outer peripheral surface of the temperature sensor unit (49), the first seal (61) being disposed between the outer peripheral surface and an inner peripheral surface (41i) of the hole portion (41h).

6. The motor unit (1) according to claim 2 or 3, further comprising a second elastic member (72) disposed inside the insertion hole (49h) of the temperature sensor unit (49), the second elastic member (72) being configured to bias the temperature measuring unit (38) disposed in the insertion hole (49h) in a second direction substantially orthogonal to the first direction.

7. The motor unit (1) according to any of claims 2, 3 or 6, wherein:
the terminal block (40) includes a hole portion (41h) that extends along the first direction, the hole portion (41h) facing the temperature measuring unit (38);
the temperature sensor unit (49) is disposed inside the hole portion (41h); and
the motor unit (1) further comprises a first seal (61) that surrounds a perimeter of an outer peripheral surface (49o) of the temperature sensor unit (49), the first seal (61) being disposed between the outer peripheral surface (49o) and an inner peripheral surface (41i) of the hole portion (41h).

8. The motor unit (1) according to any of claims 2, 3 or 6, wherein:
the terminal block (40) includes a hole portion (41h) that extends along the first direction, the hole portion (41h) facing the temperature measuring unit (38);
the temperature sensor unit (49) is disposed inside the hole portion (41h);
a wire hole (41w) through which a wire (49w) drawn out from the temperature sensor unit (49) passes is provided in a bottom surface (41b) of the hole portion (41h); and
the motor unit (1) further includes a second seal (62) that surrounds a perimeter of the wire hole (41w), the second seal (62) being disposed between the bottom surface (41b) of the hole portion (41h) and the temperature sensor unit (49).

9. The motor unit (1) according to any of claims 1 to 8, wherein the temperature measuring unit (38) is connected to a neutral point of the coil (30).
